(19) Europäisches Patentamt
European Patent Office
Office européen des brevets

(11) **EP 1 751 638 B1**

(12) **FASCICULE DE BREVET EUROPEEN**

(45) Date de publication et mention
de la délivrance du brevet:
**10.03.2010 Bulletin 2010/10**

(21) Numéro de dépôt: **05747091.6**

(22) Date de dépôt: **25.04.2005**

(51) Int Cl.:
**G05D 1/08** (2006.01)  **B64G 1/24** (2006.01)
**B64G 1/36** (2006.01)

(86) Numéro de dépôt international:
**PCT/FR2005/050275**

(87) Numéro de publication internationale:
**WO 2005/113337 (01.12.2005 Gazette 2005/48)**

(54) **DISPOSITIF ÉLECTROMAGNÉTIQUE DE GÉNÉRATION D'UNE FORCE ET D'UN COUPLE EN VUE DU POSITIONNEMENT D'UN CORPS**

ELEKTROMAGNETISCHE EINRICHTUNG ZUR ERZEUGUNG EINER KRAFT UND EINES DREHMOMENTS ZUR POSITIONIERUNG EINES KÖRPERS

ELECTROMAGNETIC DEVICE FOR GENERATING A FORCE AND A TORQUE IN ORDER TO POSITION A BODY

(84) Etats contractants désignés:
**AT BE BG CH CY CZ DE DK EE ES FI FR GB GR HU IE IS IT LI LT LU MC NL PL PT RO SE SI SK TR**

(30) Priorité: **18.05.2004 FR 0450978**

(43) Date de publication de la demande:
**14.02.2007 Bulletin 2007/07**

(73) Titulaire: **Thales**
**92200 Neuilly-sur-Seine (FR)**

(72) Inventeurs:
• **MAINI, Massimiliano,**
**c/o Rés. Parc de Vaugrenier**
**F-06270 Villeneuve Loubet (FR)**

• **DARGENT, Thierry**
**F-06810 Auribeau sur Siagne (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 3 061 239     US-A- 5 279 483**
**US-B2- 6 634 603**

**Description**

L'invention concerne les dispositifs chargés de générer une force et un couple au niveau d'un corps, au moyen d'une interaction électromagnétique impliquant un champ magnétique généré à cet effet (et non un champ magnétique existant, comme par exemple le champ magnétique terrestre), en vue du positionnement fin de ce corps.

Dans un certain nombre de domaines on utilise un système de corps distants et non liés pour effectuer des tâches complémentaires et/ou partagées qui requièrent un contrôle fin de leurs positions et orientations relatives. La distance séparant les deux corps varie généralement d'une application à l'autre, tout comme la précision du contrôle.

On entend ici par « système de corps » un ensemble d'au moins deux corps dont certaines positions et orientations relatives doivent être finement contrôlées. Dans des applications spatiales, les « corps » sont par exemple des satellites ou des sondes, typiquement destinés à voler en formation (plus ou moins rapprochée) pour accomplir une mission, comme par exemple une mission d'observation radar « par synthèse d'ouverture » ou une mission d'interférométrie optique. Parmi les corps appartenant à une formation, on appelle « hub » celui qui possède un rôle « central » par rapport à un certain critère et on appelle « flyer » tout autre corps de la formation.

Afin de contrôler les positions et orientations des corps, on les équipe de moyens de propulsion (ou actionneurs), comme par exemple des micro-tuyères chimiques (à gaz froid) ou ioniques, ou encore électriques (telles que les tuyères FEEP (pour « Field Electrical Effect Propulsion ») dans lesquelles on applique une haute tension sur des molécules de Césium ou d'Indium pour leur conférer de très grandes vitesses).

L'inconvénient de ces techniques réside dans le fait qu'elles induisent des contraintes importantes, telles qu'une durée de vie réduite et un encombrement et un poids importants (par exemple dans le cas de l'utilisation d'ergol) et/ou un aménagement contraignant (par exemple en raison de l'effet du jet de propulsion et/ou de la contamination et/ou de la linéarité requise du contrôle de force et/ou du niveau de bruit et/ou d'une faible dynamique).

Pour tenter de remédier à cet inconvénient, il a été proposé, notamment dans le document brevet US 6,634,603, d'utiliser des dispositifs d'action comportant des actionneurs électromagnétiques chargés de générer, de façon contrôlée, des forces censées permettre un positionnement précis des corps qu'ils équipent. Hélas, ces forces induisent des couples non désirés qui doivent être annulés au moyen de dispositifs dédiés, tels que des roues à réaction, qui complexifient les corps et en augmentent le poids, l'encombrement et le coût.

Aucun dispositif d'action connu n'apportant une entière satisfaction, l'invention a donc pour but d'améliorer la situation.

Elle propose à cet effet un dispositif d'action, comprenant des premiers moyens électromagnétiques installés sur au moins un premier corps et pouvant définir un premier moment magnétique ainsi qu'un champ magnétique, et au moins des seconds moyens électromagnétiques, installés sur au moins un second corps, distant du premier corps, et pouvant définir un second moment magnétique propre à interagir avec le champ magnétique.

Ce dispositif se caractérise par le fait que :

- les premiers moyens électromagnétiques sont agencés pour faire tourner temporellement la direction du premier moment magnétique en rotation autour d'un axe de rotation et à une vitesse de rotation choisis, de manière à créer un champ magnétique tournant à la même vitesse,
- les seconds moyens électromagnétiques sont agencés pour faire varier temporellement la direction et l'intensité du second moment magnétique de façon synchrone par rapport à la rotation du premier moment magnétique et selon une loi de variation calculée par une démodulation synchrone du second moment magnétique de sorte qu'une force et un couple souhaités soient induits au niveau dudit second corps,
- ce dispositif comporte en outre des moyens de calcul agencés pour déterminer ladite loi de variation en fonction au moins de la force et du couple souhaités, à induire au niveau dudit second corps.

Par exemple, la direction du premier moment magnétique est perpendiculaire audit axe de rotation.

Le dispositif d'action selon l'invention peut comporter d'autres caractéristiques complémentaires qui peuvent être prises séparément et/ou en combinaison, et notamment :

- les premiers moyens électromagnétiques peuvent être chargés de délivrer le premier moment magnétique selon une intensité et une direction constantes. Dans ce cas, les moyens de variation du premier moment magnétique sont chargés d'ordonner au premier corps de tourner autour de l'axe de rotation de manière à faire tourner ladite direction.
- les moyens de calcul peuvent être chargés de déterminer la loi de variation en fonction en outre d'un vecteur définissant la position relative du second corps par rapport au premier corps.
- la loi de variation définit les variations temporelles de la direction et de l'intensité du second moment magnétique.
- les seconds moyens électromagnétiques peuvent comporter les moyens de variation du second moment magnétique. Dans ce cas, les seconds moyens électromagnétiques peuvent être fixes par rapport au second corps.

- les premiers et les seconds moyens électromagnétiques peuvent être agencés sous la forme d'au moins une bobine alimentée en courant, ou d'au moins un aimant.
- l'intensité du premier moment magnétique est de préférence grande devant l'intensité du second moment magnétique.
- les moyens de calcul peuvent être agencés pour déterminer la loi de variation en fonction, en outre, du champ magnétique local au niveau dudit second corps. De telles mesures peuvent par exemple être fournies par un magnétomètre installé sur le second corps.

L'invention propose également un système constitué d'au moins un premier corps et d'au moins un second corps comprenant de façon répartie un dispositif d'action du type de celui présenté ci-avant.

Dans une application au domaine spatial, les premier(s) et second(s) corps d'un tel système peuvent être des satellites ou des sondes, par exemple destinés à voler en formation rapprochée.

D'autres caractéristiques et avantages de l'invention apparaîtront à l'examen de la description détaillée ci-après, et des dessins annexés, sur lesquels :

- la figure 1 illustre de façon schématique un exemple de réalisation d'un système selon l'invention dans une application au domaine spatial,
- la figure 2 illustre de façon schématique et fonctionnelle des exemples de réalisation d'un « hub » et d'un « flyer» se partageant un dispositif d'action selon l'invention,
- les figures 3A à 3C sont des diagrammes illustrant un exemple d'évolution temporelle des trois composantes Mx, My et Mz d'un moment magnétique généré par le « hub »,
- les figures 4A à 4C sont des diagrammes illustrant un exemple d'évolution temporelle des trois composantes Bx, By et Bz du champ magnétique B vu localement par le « flyer »,
- les figures 5A à 5C sont des diagrammes illustrant un exemple d'évolution temporelle des trois composantes mx, my et mz du moment magnétique généré par le « flyer » afin de produire, par interaction avec le champ magnétique local B, les force et couple souhaités,
- la figure 6A est un diagramme illustrant de façon superposée les évolutions temporelles du couple souhaité (Γs), du couple instantané produit (Γp) et du couple moyen (Γm) obtenu en moyennant le couple instantané produit (Γp) sur une période de rotation du champ B, et
- la figure 6B est un diagramme illustrant de façon superposée les évolutions temporelles de la force souhaitée (Fs), de la force instantanée produite (Fp) et de la force moyenne (Fm) obtenue en moyennant la force instantanée produite (Fp) sur une période de rotation du champ B.

Les dessins annexés pourront non seulement servir à compléter l'invention, mais aussi contribuer à sa définition, le cas échéant.

L'invention a pour objet de permettre la génération au niveau d'un corps appartenant à un système d'au moins deux corps, au moyen d'une interaction électromagnétique impliquant au moins un champ magnétique généré à cet effet, d'une force et d'un couple souhaités en vue du positionnement fin de ce corps.

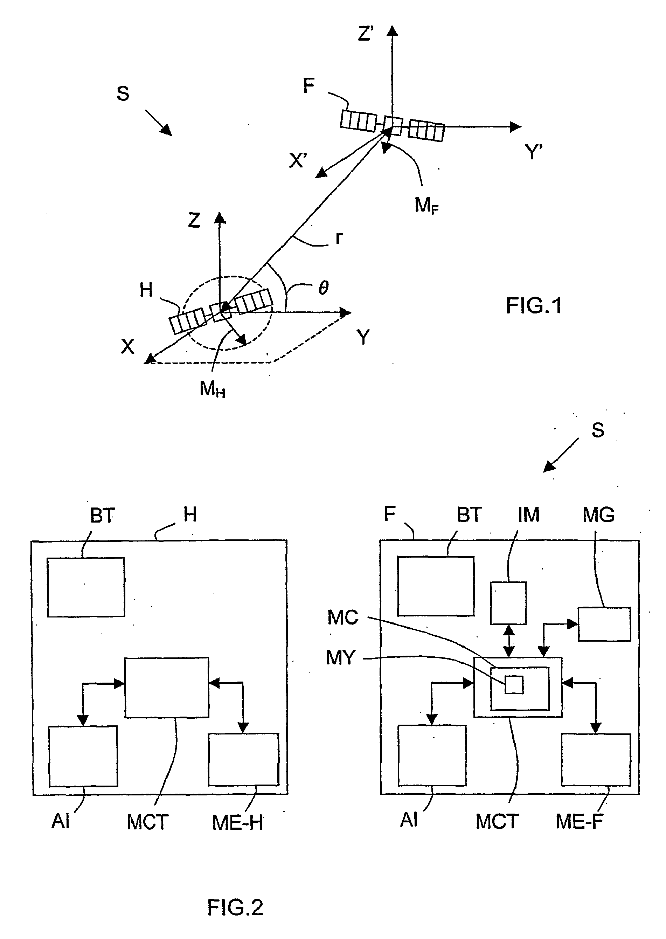

Le système S de corps peut par exemple être constitué, comme illustré sur la figure 1, de satellites volant en formation rapprochée (typiquement distants de quelques dizaines de mètres). Mais, les corps du système S pourraient se présenter sous d'autres formes, et notamment sous la forme de sondes.

On considère dans ce qui suit, à titre d'exemple non limitatif, que le système de corps S est constitué de deux satellites assurant une mission d'observation, l'un d'entre eux H, ci-après appelé « hub », ayant un rôle central, et l'autre F, ci-après appelé « flyer », étant distant du hub.

Comme indiqué précédemment, le vol en formation rapprochée requiert l'instauration d'une configuration géométrique prédéfinie, et souvent variable au cours d'une mission. Dans l'exemple de système S décrit, cette instauration nécessite un contrôle fin des position et orientation du flyer F par rapport au hub H. Il est important de noter qu'en présence d'un système comportant un hub H et plusieurs flyers F, on doit contrôler finement les positions et orientations relatives des flyers les uns par rapport aux autres, et non celles des flyers par rapport au hub.

Pour instaurer une configuration géométrique, on doit appliquer des couples et des forces sur les différents corps du système S et notamment sur ses flyers F. On utilise à cet effet un dispositif d'action, dont les constituants sont répartis sur les différents corps (hub H et flyers F).

On se réfère aux figures 1 et 2 pour décrire un dispositif d'action, selon l'invention, implanté de façon répartie dans le hub H et le flyer F, qui constituent dans l'exemple illustré le système de corps S. En présence de plusieurs flyers F, chaque flyer comporte sensiblement les mêmes constituants du dispositif d'action que ceux installés sur le flyer F qui va être décrit ci-après.

Le(s) hub(s) H et le(s) flyer(s) F sont placés en orbite par un lanceur lors d'un ou plusieurs tirs. Si nécessaire, chaque corps H, F utilise ses actionneurs inertiels AI pour rejoindre sa position finale en orbite de mission. De tels actionneurs inertiels AI sont par exemple constitués de tuyères et de réservoirs associés contenant du combustible. Les actionneurs inertiels AI sont par exemple pilotés par un module de contrôle MCT.

En présence d'un unique flyer F, comme illustré, celui-ci doit ensuite être finement positionné par rapport, par exemple, à un repère de consigne (pour viser une région avec son instrument d'observation). Mais, comme indiqué précédemment, en présence de plusieurs flyers, ceux-ci doivent aussi être finement positionnés les uns par rapport aux autres de manière à définir la configuration géométrique de la mission. Le dispositif d'action intervient à ce stade.

Il est plus précisément chargé de générer une force et un couple souhaités au niveau de chaque flyer F. Dans cet exemple, on considère que le hub H est correctement positionné, par exemple par rapport à un référentiel terrestre. Par conséquent, le dispositif d'action doit contrôler le positionnement fin du flyer F.

Dans cet exemple, le dispositif d'action comprend tout d'abord :

- des premiers moyens électromagnétiques ME-H installés sur le hub H et chargés de définir un champ magnétique B au moyen d'un dipôle magnétique de moment magnétique $M_H$, et
- des seconds moyens électromagnétiques ME-F installés sur le flyer F et définissant un autre dipôle magnétique de moment magnétique $M_F$, destiné à interagir avec le champ magnétique vu localement par le flyer F (principalement constitué du champ magnétique B) pour induire une force F et un couple $\Gamma$ souhaités au niveau du flyer F (du moins en moyenne, comme on le verra plus loin).

Les premiers ME-H et les seconds ME-F moyens électromagnétiques peuvent être par exemple réalisés sous la forme d'une ou plusieurs bobines parcourues par un courant, ou d'un ou plusieurs aimants, par exemple perpendiculaires entre eux.

Trois types de bobines peuvent être utilisés : les bobines dites « à air » (c'est-à-dire ne comportant qu'un solénoïde sans noyau ferromagnétique), les bobines comportant un noyau ferromagnétique, et les bobines supraconductrices.

L'intensité du moment magnétique $M_H$ est préférentiellement grande devant celle du moment magnétique $M_F$, afin que le champ magnétique vu localement par le flyer F puisse être assimilé au seul champ magnétique B produit par les premiers moyens électromagnétiques ME-H. Cela permet de s'affranchir des interférences magnétiques produites par d'autres sources distantes (par exemple des flyers voisins dans le cas d'une application comportant un hub et plusieurs flyers). Dans ce cas, on peut par exemple utiliser une bobine supraconductrice pour générer le moment magnétique $M_H$ de forte intensité et une bobine à air pour générer le moment magnétique $M_F$ de plus faible intensité.

Les premiers moyens électromagnétiques ME-H et les seconds moyens électromagnétiques ME-F sont alimentés électriquement par une source électrique BT de leur corps H ou F, par exemple agencée sous la forme d'une batterie couplée à des panneaux solaires.

Le dispositif d'action est par ailleurs chargé de faire varier (ou moduler), d'une part, le moment magnétique $M_H$ selon une première loi de variation (ou modulation) choisie, et d'autre part, le moment magnétique $M_F$ selon une seconde loi de variation (ou modulation), afin que chaque force et chaque couple souhaités soient induits au niveau du flyer F.

La première loi de variation est de préférence prédéterminée. Par exemple, la première loi de variation définit la variation de la direction du moment magnétique $M_H$, à intensité constante.

Comme cela est illustré sur la figure 1, la variation de la direction du moment magnétique $M_H$ peut se faire par rotation autour d'un axe de rotation choisi Z. Dans ce cas, il est particulièrement avantageux que le moment magnétique $M_H$ soit constamment contenu dans un plan XY perpendiculaire à l'axe de rotation Z.

Pour obtenir une telle première loi de variation deux solutions peuvent être envisagées.

Une première solution consiste, d'une part, à utiliser des premiers moyens électromagnétiques ME-H fixes par rapport au hub H et définissant un moment magnétique $M_H$ d'intensité constante et de direction fixe par rapport à un référentiel (X,Y,Z) rattaché audit hub H, et d'autre part, à entraîner le hub H en rotation, selon une vitesse de rotation (ou pulsation) w, autour de l'axe Z du référentiel fixe (X,Y,Z).

Une seconde solution consiste à utiliser des premiers moyens électromagnétiques ME-H capables de définir un moment magnétique $M_H$ d'intensité constante et de direction variable par rotation, selon une vitesse de rotation (ou pulsation) w, autour de l'axe Z d'un référentiel fixe (X,Y,Z) rattaché au hub H.

Dans ce dernier cas, le hub H n'a pas besoin d'être en mouvement. A cet effet, les premiers moyens électromagnétiques ME-H peuvent être soit fixes par rapport au hub H et au référentiel (X,Y,Z) qui lui est rattaché, et capables de produire un moment magnétique $M_H$ de direction variable temporellement (c'est-à-dire rotatif), soit mobiles en rotation par rapport au hub H et au référentiel (X,Y,Z) qui lui est rattaché, et capables de produire un moment magnétique $M_H$ de direction et intensité constantes, la rotation des premiers moyens électromagnétiques ME-H assurant alors la variation temporelle de direction du moment magnétique $M_H$.

Selon l'invention, la seconde loi de variation est déterminée par un module de calcul MC faisant partie du dispositif d'action, et par exemple implanté dans le flyer F.

Dans l'exemple illustré sur la figure 2, le module de calcul MC est implanté dans le module de contrôle MCT du flyer F. Mais, il pourrait être distinct de celui-ci, voire même indépendant de lui. Par ailleurs, ce module de calcul MC peut être réalisé sous la forme de circuits électroniques, de modules logiciels (ou informatiques), ou d'une combinaison de circuits et de logiciels.

Le module de calcul MC est plus précisément chargé de déterminer une seconde loi de variation pour le moment magnétique $M_F$ en fonction, au moins, de la force Fs et du couple s souhaités, qui doivent être induits au niveau du flyer F par l'interaction entre le champ magnétique local (assimilé à B) et ledit moment magnétique $M_F$, ainsi que de la première loi de variation.

La force Fs et le couple Γs souhaités sont typiquement calculés par une loi propre à la mission, elle même calculée par un module de calcul dédié (par exemple, le module de contrôle MCT). On suppose donc ici que la force Fs et le couple Γs souhaités sont connus par le module de calcul MC.

Le module de calcul MC peut être chargé de déterminer la seconde loi de variation en fonction, en outre, d'une mesure du champ magnétique local au niveau du flyer F. Cette mesure du champ magnétique local est alors préférentiellement fournie par un magnétomètre MG implanté dans le flyer F.

Mais, on peut envisager une variante dans laquelle on considère à chaque instant que le champ magnétique local vu par le flyer F est le champ magnétique B généré par les premiers moyens électromagnétiques ME-H du hub H. Dans ce cas, l'intensité du champ magnétique B vu localement par le flyer F peut être prédéterminée pour la mission (le vecteur r définissant la position relative du flyer F par rapport au hub H étant considérée comme sensiblement constant). En d'autres termes, le module de calcul MC dispose d'un modèle prédéfini du champ magnétique vu localement par le flyer F compte tenu de sa position définie par la loi de commande de la mission.

En variante, l'intensité du champ magnétique B vu par le flyer F peut être déterminable en fonction du vecteur r précité. Il est en effet rappelé que cette intensité $I_B$ varie en $1/r^3$, conformément à la formule donnée ci-dessous, valable en champ lointain (c'est-à-dire loin du dipôle qui génère le champ magnétique) :

$$\vec{B} = \frac{\mu_0}{4\pi} \frac{3(\vec{M}_H . \vec{r})\vec{r} - r^2 \vec{M}_H}{r^5}$$

où $\mu_0$ est la permittivité du vide (soit $4\pi 10^{-7}$), le vecteur $M_H$ est le vecteur moment magnétique généré par le hub H et le vecteur r est le vecteur position précité.

Les paramètres définissant la première loi de variation (du moment magnétique $M_H$) sont par exemple stockés dans la mémoire MY du module de calcul MC.

Dans un souci de précision, le dispositif d'action peut être équipé d'un instrument IM capable d'estimer précisément le vecteur position r. Cet instrument IM est par exemple un module local utilisant le positionnement par satellite, par exemple de type GPS (pour « Global Positioning System »).

Mais, on peut envisager une variante dans laquelle on considère que le vecteur position r est connu et considéré comme constant. On peut également envisager une autre variante dans laquelle le vecteur position r est déduit par le module de calcul MC, par exemple par déconvolution sur une période, des mesures du champ magnétique local, délivrées par le magnétomètre MG (il doit pour ce faire connaître le vecteur champ magnétique B généré par les premiers moyens électromagnétiques ME-H).

La seconde loi de variation du moment magnétique $M_F$ est destinée à permettre le contrôle de l'interaction devant induire la force Fs et le couple Γs souhaités (définis par la loi de commande de la mission). Elle spécifie comment la direction et l'intensité du moment magnétique $M_F$ doivent varier. Comme indiqué précédemment, cette variation peut par exemple être obtenue électriquement au moyen de trois bobines en configuration orthogonale dont on contrôle les courants respectifs.

Le champ magnétique local, vu par le flyer F, « tourne » à la même pulsation $\omega$ que le moment magnétique $M_H$ (mais en général il décrit une ellipse dans un certain plan). Par conséquent, il est possible de déterminer une seconde loi de variation (du moment magnétique $M_F$) permettant de produire les couple et force souhaités en moyenne sur une période de rotation du champ magnétique local en partant du vecteur position r, et de la valeur de la pulsation $\omega$ (donnée par la première loi de variation (de $M_H$)), ainsi qu'éventuellement de la mesure du champ magnétique local et de l'information de phase sur le moment magnétique $M_H$. En d'autres termes le module de calcul MC effectue une « démodulation » synchrone pour obtenir les force moyenne Fm et couple moyen Γm souhaités sur une période de rotation du moment magnétique $M_F$ et donc du champ magnétique B. La seconde loi de variation est donc donnée par la combinaison de composantes orthogonales (sinus et cosinus) à la même pulsation $\omega$ et à la même phase $\phi$ que le moment magnétique $M_H$.

Il est utile de mentionner que la moyenne étant effectuée sur une période de rotation, il est préférable que le champ magnétique B tourne plus rapidement que les variations des force Fs et couple rs souhaités. Les variations instantanées des force F(t) et couple r(t) sont filtrées par l'inertie mécanique du flyer F.

La démodulation synchrone peut s'effectuer comme indiqué ci-après.

Lorsqu'un dipôle magnétique est soumis à un champ magnétique B un couple et une force agissent sur ce dipôle. Dans le cas présent, le champ magnétique B est généré par le dipôle magnétique de moment magnétique $M_H$, et le dipôle magnétique de moment magnétique $M_F$ est soumis à ce champ magnétique B. Les force et couple d'interaction sont donnés par les relations suivantes :

$\Gamma(M_H,M_F) = M_F{}_X\ B(M_H)$, (où « x » représente le produit vectoriel)
$F(M_H,M_F) = grad(MF.B(M_H)) = (M_F.grad)B(M_H)$, (où « . » représente le produit scalaire).

Par ailleurs, si l'on suppose que le moment magnétique $M_H$ tourne dans le plan XY à la pulsation ω et avec une phase Φ, comme illustré sur la figure 1, alors son expression vectorielle peut être définie par la relation suivante :

$$\vec{M}_H = M_H \begin{bmatrix} \cos(\omega t + \phi) \\ \sin(\omega t + \phi) \\ 0 \end{bmatrix}$$

Dans ce cas, on peut utiliser l'expression vectorielle du moment magnétique $M_F$, donnée ci-dessous, pour démoduler à la pulsation ω :

$$\vec{M}_F = M_F \begin{bmatrix} m_{cx'}\cos(\omega t + \phi) + m_{sx'}\sin(\omega t + \phi) \\ m_{cy'}\cos(\omega t + \phi) + m_{sy'}\sin(\omega t + \phi) \\ m_{cz'}\cos(\omega t + \phi) + m_{sz'}\sin(\omega t + \phi) \end{bmatrix}$$

où $m_{ci}$ et $m_{si}$ sont respectivement les paramètres de démodulation en cosinus et en sinus suivant l'axe i (i=X', Y', Z') dans le référentiel rattaché au flyer F, fonction de l'instant considéré. On peut noter que la phase ϕ peut être quelconque, dès lors qu'elle est identique entre $M_H$ et $M_F$.

On procède ensuite à l'intégration analytique, sur une période de rotation, des expressions des force F et couple r données ci-avant, afin d'obtenir les expressions des force moyenne Fm et couple moyen Γm en fonction des paramètres de démodulation ($m_{ci}$ et $m_{si}$). Cette opération permet d'éliminer la dépendance temporelle.

On impose en outre que les force moyenne Fm et couple moyen Γm soient sur une période respectivement égaux aux force Fs et couple Γs souhaités. Par exemple, si l'on souhaite induire une force Fs et un couple Γs toutes les périodes de 100 ms, on demande à l'actionneur de produire des force F et couple Γ qui sur chaque période de 100 ms sont en moyenne égales aux force Fs et couple Γs souhaités sur ladite période.

On obtient alors le système linéaire de six équations à six inconnues (les six paramètres de démodulation $m_{ci}$ et $m_{si}$), donné ci-après :

$$\begin{bmatrix} \Gamma_m \\ F_m \end{bmatrix} = D. \begin{bmatrix} m_{cx'} \\ m_{sx'} \\ m_{cy'} \\ m_{sy'} \\ m_{cz'} \\ m_{sz'} \end{bmatrix} = \begin{bmatrix} \Gamma_s \\ F_s \end{bmatrix}$$

où D est la matrice recherchée, fonction des positions relatives du hub H et du flyer F, permettant de passer (une fois inversée) des couple Γs et force Fs souhaités à l'expression vectorielle du second moment magnétique $M_F$. On peut en effet montrer que la matrice D possède une expression analytique qui dépend de la position relative du moment magnétique $M_F$ par rapport au moment magnétique $M_H$, et donc de la position relative du flyer F par rapport au hub H.

Par conséquent, la connaissance du vecteur position r permet au module de calcul MC de déterminer la matrice D, puis de déterminer les six paramètres de démodulation $m_{ci}$ et $m_{si}$ à partir de D et des force Fs et couple $\Gamma$s souhaités. Il peut ensuite calculer, au moyen de la relation vectorielle donnant $M_F$ en fonction des paramètres de démodulation (donnée ci-avant), les coordonnées vectorielles du moment magnétique $M_F$ qui doit être fixé au niveau du flyer F pour induire les force Fs et couple $\Gamma$s souhaités.

Les points de l'espace où la matrice D est singulière doivent être proscrits, étant donné qu'ils correspondent à des positions du flyer F dans lesquelles le dispositif d'action n'est pas en mesure de générer n'importe quelle combinaison de couple et force. En effet, les configurations singulières correspondent à des situations où le champ local vu par le flyer F varie d'une façon « trop simple » (par exemple, lorsqu'il tourne dans un plan) pour pouvoir générer n'importe quelle combinaison de couple et force.

Dans l'exemple illustré (correspondant à un moment magnétique $M_F$ compris dans le plan XY de rotation), les points singuliers sont tous ceux qui appartiennent audit plan XY, ainsi que tous les points appartenant à l'axe de rotation Z du moment magnétique $M_F$. En d'autres termes, les situations dans lesquelles le flyer F est positionné dans le plan de rotation XY ou suivant l'axe de rotation Z sont singulières.

Il est possible de réduire le nombre de positions singulières, par exemple en introduisant une double modulation au niveau des premiers moyens électromagnétiques ME-H. Pour ce faire, on peut par exemple utiliser des premiers moyens électromagnétiques ME-H capables de générer deux moments magnétiques $M_{H1}$ et $M_{H2}$ tournant dans des plans différents (par exemple XY et XZ) et à des pulsations différentes $n_1\omega$ et $n_2\omega$, où $n_1$ et $n_2$ sont des entiers différents. Dans ce cas, les singularités ne sont plus situées que sur les deux axes de rotation des deux moments magnétiques $M_{H1}$ et $M_{H2}$ et sur l'axe d'intersection des deux plans de rotation des deux moments magnétiques $M_{H1}$ et $M_{H2}$. Bien entendu, cela complexifie sensiblement les calculs puisqu'il faut alors déterminer douze paramètres de démodulation ($m1_{ci}$ et $m1_{si}$ pour $M_{H1}$ et $m2_{ci}$ et $m2_{si}$ pour $M_{H2}$).

Une variante du mode de réalisation précédent consiste à prévoir deux hubs (H1 et H2), l'un (H1) étant équipé des premiers moyens électromagnétiques (ME-H1), décrits précédemment et capables de générer un premier moment magnétique $M_{H1}$ tournant dans un premier plan (par exemple XY) et à une pulsation $n_1\omega$, l'autre (H2) étant équipé des troisième moyens électromagnétiques (ME-H3), du même type que les premiers et capables de générer un troisième moment magnétique $M_{H2}$ tournant dans un second plan (par exemple XZ), différent du premier plan, et à une pulsation $n_2\omega$, différente de $n_1\omega$. L'interaction s'effectue alors entre le second moment magnétique $M_F$ de chaque flyer et les deux champs magnétiques induits par les premier $M_{H1}$ et troisième $M_{H2}$ moments magnétiques générés par les deux hubs (H1 et H2). Cela permet de réduire encore plus le nombre de positions singulières (puisqu'elles sont alors limitées aux intersections entre les plan et axe de rotation du premier moment magnétique $M_{H1}$ et les plan et axe de rotation du troisième moment magnétique $M_{H2}$).

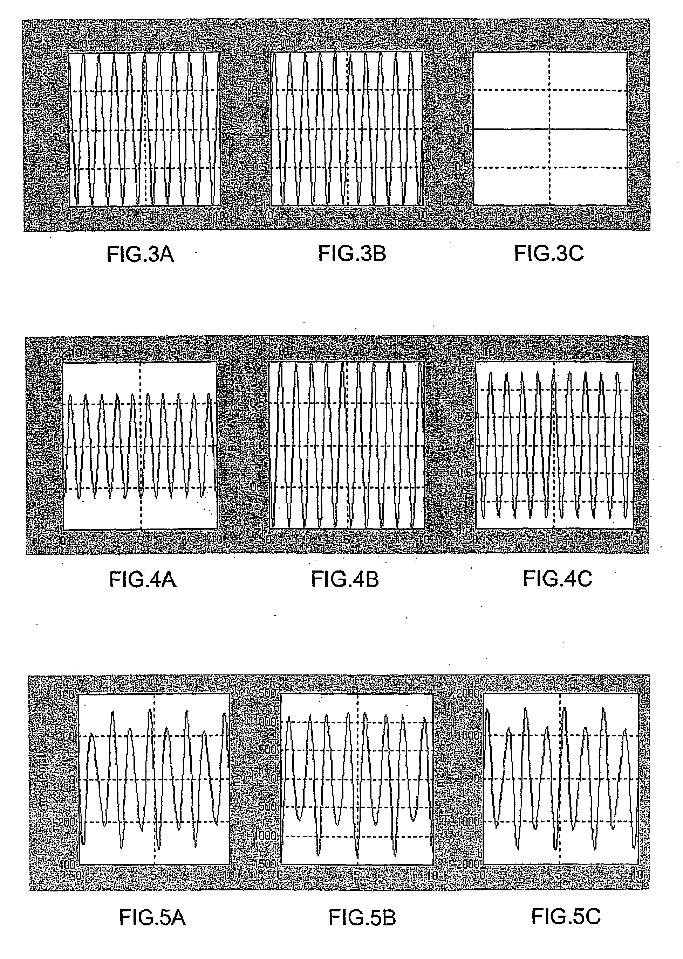

On se réfère maintenant aux figures 3 à 6 pour illustrer sur un exemple la démodulation effectuée par le module de calcul MC et son résultat en termes de force F et de couple r induits.

Plus précisément, sur les figures 3A à 3C se trouvent représentés trois diagrammes illustrant respectivement un exemple d'évolution temporelle, sur une période de rotation, des trois composantes Mx, My et Mz du moment magnétique $M_H$ généré par les premiers moyens électromagnétiques ME-H du hub H, dans le référentiel (X,Y,Z) rattaché à ce dernier et en Ampère mètre carré ($Am^2$). La composante Mz est ici nulle du fait que le moment magnétique $M_H$ tourne dans le plan XY.

Sur les figures 4A à 4C se trouvent représentés trois diagrammes illustrant respectivement les évolutions temporelles des trois composantes Bx, By et Bz du champ magnétique B (correspondant au moment magnétique $M_H$ illustré sur les figures 3A à 3C) vu localement par le flyer F, dans le référentiel (X',Y',Z') rattaché à ce dernier et en Weber (Wb). Cet exemple de champ magnétique local correspond à une distance r entre le hub H et le flyer F égale à 100 mètres et à une élévation $\theta$, du flyer F par rapport au hub H, égale à 60°. On peut noter que l'azimut n'intervient pas en raison de la symétrie par rapport à l'axe Z.

Sur les figures 5A à 5C se trouvent représentés trois diagrammes illustrant respectivement les évolutions temporelles des trois composantes mx, my et mz du moment magnétique $M_F$ généré par les seconds moyens électromagnétiques ME-F du flyer F, dans le référentiel (X',Y',Z') rattaché à ce dernier (sur la figure 2 les référentiels (X,Y,Z) et (X',Y',Z') présentent des axes parallèles entre eux, mais cela n'est pas obligatoire) et en Ampère mètre carré ($Am^2$), afin de produire par interaction avec le champ magnétique local, illustré sur les figures 4A à 4C, des force Fs et couple $\Gamma$s souhaités.

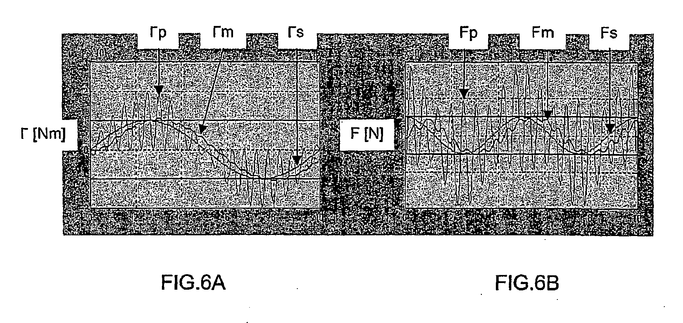

Sur la figure 6A se trouve représenté un diagramme illustrant les évolutions temporelles superposées, en Newton mètre (Nm), du couple souhaité $\Gamma$s, du couple instantané produit $\Gamma$p et du couple moyen $\Gamma$m obtenu en moyennant le couple instantané $\Gamma$p sur une période de rotation du champ magnétique local B illustré sur les figures 4A à 4C, dans le cas d'une interaction entre ledit champ magnétique local B et le moment magnétique $M_F$ illustré sur les figures 5A à 5C.

Enfin, sur la figure 6B se trouve représenté un diagramme illustrant les évolutions temporelles superposées, suivant l'axe X' (=X) du référentiel (X',Y',Z') rattaché au flyer F et en Newton (N), de la force souhaitée Fs, de la force instantanée produite Fp et de la force moyenne Fm obtenue en moyennant la force instantanée produite Fp sur une période de rotation du champ magnétique local B illustré sur les figures 4A à 4C, dans le cas d'une interaction entre ledit champ magnétique local B et le moment magnétique $M_F$ illustré sur les figures 5A à 5C.

Il est important de noter que les opérations de « moyennage » permettant d'obtenir le couple moyen Γm et la force moyenne Fm sont dans la pratique effectuées par le flyer F du fait de son inertie mécanique.

Par ailleurs, il est également important de noter que les variations des moments magnétiques $M_H$ et $M_F$ peuvent être produites soit électriquement (par exemple par variation des courants des bobines), soit mécaniquement (par exemple par rotation des bobines), soit encore par combinaison de variations électrique et mécanique.

Dans ce qui précède on a décrit un mode de mise en oeuvre de l'invention dans lequel la première loi de variation (du moment magnétique $M_H$) consistait en une variation de le direction (par rotation selon un angle prédéterminé), à intensité constante, et par conséquent indépendamment des force et couple souhaités au niveau du flyer F. Mais, on peut envisager que la première loi de variation soit déterminée localement en fonction des force et couple souhaités. Dans ce cas, l'intensité du moment magnétique $M_H$ et/ou l'angle peu(ven)t varier en fonction des force et couple souhaités.

L'invention ne se limite pas aux modes de réalisation de dispositif d'action, de premier et second corps et de système de corps décrits ci-avant, seulement à titre d'exemple, mais elle englobe toutes les variantes que pourra envisager l'homme de l'art dans le cadre des revendications ci-après.

**Revendications**

1. Dispositif d'action, comprenant des premiers moyens électromagnétiques (ME-H), installés sur au moins un premier corps (H) et définissant un premier moment magnétique ainsi qu'un champ magnétique, et au moins des seconds moyens électromagnétiques (ME-F), installés sur au moins un second corps (F), distant du premier corps (H), et définissant un second moment magnétique propre à interagir avec ledit champ magnétique, **caractérisé en ce que** i) les premiers moyens électromagnétiques (ME-H) sont agencés pour faire tourner temporellement la direction du premier moment magnétique en rotation autour d'un axe de rotation (Z) et à une vitesse de rotation (ω) choisis, de manière à créer un champ magnétique tournant à la même vitesse (w), II) les seconds moyens électromagnétiques (ME-F) sont agencés pour faire varier temporellement la direction et l'intensité du second moment magnétique de façon synchrone par rapport à la rotation du premier moment magnétique et selon une loi de variation calculée par une démodulation synchrone du second moment magnétique de sorte qu'une force et un couple souhaités soient induits au niveau dudit second corps (F), et **en ce qu'**il comporte iii) des moyens de calcul (MC) agencés pour déterminer ladite loi de variation en fonction au moins de la force et du couple souhaités à induire au niveau dudit second corps (F).

2. Dispositif selon la revendication 1, **caractérisé en ce que** la direction du premier moment magnétique est perpendiculaire audit axe de rotation (Z).

3. Dispositif selon la revendication 2, **caractérisé en ce que** lesdits premiers moyens électromagnétiques (ME-H) sont agencés pour délivrer ledit premier moment magnétique selon une intensité et une direction constantes, et **en ce que** des moyens de variation du premier moment magnétique sont agencés pour ordonner audit premier corps (H) de tourner autour dudit axe de rotation (Z) de manière à faire tourner ladite direction.

4. Dispositif selon l'une des revendications 1 à 3, **caractérisé en ce que** lesdits moyens de calcul (MC) sont agencés pour déterminer ladite loi de variation en fonction en outre d'un vecteur définissant la position relative du second corps (F) par rapport au premier corps (H).

5. Dispositif selon l'une des revendications 1 à 4, **caractérisé en ce que** ladite loi de variation est une loi définissant les variations temporelles des direction et intensité dudit second moment magnétique..

6. Dispositif selon l'une des revendications 1 à 5, **caractérisé en ce que** lesdits seconds moyens électromagnétiques (ME-F) comprennent lesdits moyens de variation du second moment magnétique.

7. Dispositif selon la revendication 6, **caractérisé en ce que** lesdits seconds moyens électromagnétiques (ME-F) sont fixes par rapport audit second corps (F).

8. Dispositif selon l'une des revendications 1 à 7, **caractérisé en ce que** lesdits seconds moyens électromagnétiques (ME-F) sont agencés sous la forme d'au moins une bobine alimentée en courant ou d'au moins un aimant.

9. Dispositif selon l'une des revendications 1 à 8, **caractérisé en ce que** lesdits premiers moyens électromagnétiques (ME-H) sont agencés sous la forme d'au moins une bobine alimentée en courant ou d'au moins un aimant.

10. Dispositif selon l'une des revendications 1 à 8, **caractérisé en ce que** l'intensité dudit premier moment magnétique est grande devant l'intensité dudit second moment magnétique.

11. Dispositif selon l'une des revendications 1 à 10, **caractérisé en ce que** lesdits moyens de calcul sont agencés pour déterminer ladite loi de variation en fonction, en outre, du champ magnétique local au niveau dudit second corps.

12. Dispositif selon la revendication 11, **caractérisé en ce qu'**il comprend un magnétomètre (MG) installé sur ledit second corps (F) et agencé pour alimenter lesdits moyens de calcul (MC) en mesures du champ magnétique local.

13. Dispositif selon l'une des revendications 1 à 12, **caractérisé en ce que** lesdits moyens de calcul (MC) sont installés sur ledit second corps (F).

14. Système (S) constitué d'au moins un premier (H) et d'au moins un second (F) corps, **caractérisé en ce qu'**il comprend un dispositif d'action selon l'une des revendications précédentes.

15. Système selon la revendication 14, **caractérisé en ce que** lesdits premier(s) (H), second(s) (F) corps sont des satellites ou des sondes destinés à voler en formation.


**Claims**

1. Actuating device comprising first electromagnetic means (ME-H) installed on at least one first body (H) and defining a first magnetic moment and a magnetic field, and at least second electromagnetic means (ME-F) installed on at least one second body (F), remote from the first body (H), and defining a second magnetic moment for interacting with said magnetic field, **characterised in that** i) the first electromagnetic means (ME-H) are arranged to temporally turn the direction of the first magnetic moment by rotating it around an axis of rotation (Z) and at a selected speed of rotation ($\omega$) in order to create a magnetic field turning at the same speed ($\omega$), ii) the second electromagnetic means (ME-F) are arranged to temporally vary the direction and the intensity of the second magnetic moment in a synchronous manner in relation to the rotation of the first magnetic moment and according to a law of variation calculated by a synchronous demodulation of the second magnetic moment so that a desired force and torque are induced on said second body (F), and **in that** it comprises iii) computation means (MC) arranged to determine said law of variation as a function of at least the desired force and torque to be induced on said second body (F).

2. Device according to claim 1, **characterised in that** the direction of the first magnetic moment is perpendicular to said rotation axis (Z).

3. Device according to claim 2, **characterised in that** said first electromagnetic means (ME-H) are arranged to provide said first magnetic moment according to a constant intensity and direction, and **in that** the variation means for the first magnetic moment are arranged to command the first body (H) to turn around said axis of rotation (Z) so that said direction is changed.

4. Device according to one of claims 1 to 3, **characterised in that** said computation means (MC) are arranged to determine said law of variation further as a function of a vector defining the relative position of the second body (F) in relation to the first body (H).

5. Device according to one of claims 1 to 4, **characterised in that** said law of variation is a law defining the temporal variations in the direction and intensity of said second magnetic moment.

6. Device according to one of claims 1 to 5, **characterised in that** said second electromagnetic means (ME-F) comprise said means of variation for the second magnetic moment.

7. Device according to claim 6, **characterised in that** said second electromagnetic means (ME-F) are fixed in relation to said second body (F).

8. Device according to one of claims 1 to 7, **characterised in that** said second electromagnetic means (ME-H) are arranged in the form of at least one coil supplied with a current or at least one magnet.

9. Device according to one of claims 1 to 8, **characterised in that** said first electromagnetic means (ME-H) are arranged in the form of at least one coil supplied with a current or at least one magnet.

10. Device according to one of claims 1 to 8, **characterised in that** the intensity of said first magnetic moment is high compared with the intensity of said second magnetic moment.

11. Device according to one of claims 1 to 10, **characterised in that** said computation means are arranged to determine said law of variation further as a function of the local magnetic field on the second body.

12. Device according to claim 11, **characterised in that** it comprises a magnetometer (MG) installed on said second body (F) and arranged to provide said computation means (MC) with local magnetic field measurements.

13. Device according to one of claims 1 to 12, **characterised in that** said computation means (MC) are installed on said second body (F).

14. System (S) comprising at least one first (H) and at least one second (F) body, **characterised in that** it comprises an actuating device according to one of the previous claims.

15. System according to claim 14, **characterised in that** said first (H), second (F) body(s) are satellites or probes designed to fly in formation.

**Patentansprüche**

1. Betätigungsvorrichtung, die Folgendes umfasst: erste elektromagnetische Mittel (ME-H), die auf wenigstens einem ersten Körper (H) installiert sind und ein erstes magnetisches Moment sowie ein Magnetfeld definieren, und wenigstens zweite elektromagnetische Mittel (ME-F), die auf wenigstens einem zweiten Körper (F), fern von dem ersten Körper (H), installiert sind und ein zweites magnetisches Moment zum Interagieren mit dem Magnetfeld definieren, **dadurch gekennzeichnet, dass** i) die ersten elektromagnetischen Mittel (ME-H) so gestaltet sind, dass sie eine zeitliche Drehung der Richtung des ersten magnetischen Moments durch Rotation um eine Rotationsachse (Z) mit einer gewählten Rotationsgeschwindigkeit ($\omega$) bewirken, so dass ein Magnetfeld entsteht, das sich mit derselben Geschwindigkeit ($\omega$) dreht, ii) die zweiten elektromagnetischen Mittel (ME-F) so gestaltet sind, dass sie bewirken, dass die Richtung und die Intensität des zweiten magnetischen Moments auf synchrone Weise in Bezug auf die Rotation des ersten magnetischen Moments und gemäß einem Variationsgesetz zeitlich variieren, das durch eine synchrone Demodulation des zweiten magnetischen Moments berechnet wird, so dass ein(e) gewünschte(s) Kraft und Drehmoment an dem zweiten Körpers (F) induziert werden, und **dadurch**, dass sie iii) Rechenmittel (MC) zum Ermitteln des Variationsgesetzes wenigstens in Abhängigkeit von der/dem an dem zweiten Körper (F) zu induzierenden gewünschten Kraft und Drehmoment umfasst.

2. Vorrichtung nach Anspruch 1, **dadurch gekennzeichnet, dass** die Richtung des ersten magnetischen Moments lotrecht zu der Rotationsachse (Z) ist.

3. Vorrichtung nach Anspruch 2, **dadurch gekennzeichnet, dass** die ersten elektromagnetischen Mittel (ME-H) so gestaltet sind, dass das erste magnetische Moment gemäß einer konstanten Intensität und Richtung erzeugt wird, und **dadurch**, dass die Variationsmittel des ersten magnetischen Moments so ausgelegt sind, dass sie den ersten Körper (H) veranlassen, sich so um die Rotationsachse (Z) zu drehen, dass die Richtung gedreht wird.

4. Vorrichtung nach einem der Ansprüche 1 bis 3, **dadurch gekennzeichnet, dass** die Rechenmittel (MC) so gestaltet sind, dass sie das Variationsgesetz ferner in Abhängigkeit von einem Vektor bestimmen, der die relative Position des zweiten Körpers (F) in Bezug auf den ersten Körper (H) definiert.

5. Vorrichtung nach einem der Ansprüche 1 bis 4, **dadurch gekennzeichnet, dass** das Variationsgesetz ein Gesetz ist, das die zeitlichen Variationen von Richtung und Intensität des zweiten magnetischen Moments definiert.

6. Vorrichtung nach einem der Ansprüche 1 bis 5, **dadurch gekennzeichnet, dass** die zweiten elektromagnetischen Mittel (ME-F) die Variationsmittel des zweiten magnetischen Moments umfassen.

7. Vorrichtung nach Anspruch 6, **dadurch gekennzeichnet, dass** die zweiten elektromagnetischen Mittel (ME-F) in Bezug auf den zweiten Körper (F) fest sind.

8. Vorrichtung nach einem der Ansprüche 1 bis 7, **dadurch gekennzeichnet, dass** die zweiten elektromagnetischen Mittel (ME-F) in Form von wenigstens einer stromgespeisten Spule oder wenigstens einem Magnet ausgestaltet sind.

9. Vorrichtung nach einem der Ansprüche 1 bis 8, **dadurch gekennzeichnet, dass** die ersten elektromagnetischen Mittel (ME-H) in Form von wenigstens einer stromgespeisten Spule oder wenigstens einem Magnet ausgestaltet sind.

10. Vorrichtung nach einem der Ansprüche 1 bis 8, **dadurch gekennzeichnet, dass** die Intensität des ersten magnetischen Moments gegenüber der Intensität des zweiten magnetischen Moments groß ist.

11. Vorrichtung nach einem der Ansprüche 1 bis 10, **dadurch gekennzeichnet, dass** die Rechenmittel so gestaltet sind, dass sie das Variationsgesetz ferner in Abhängigkeit von dem örtlichen Magnetfeld an dem zweiten Körper bestimmen.

12. Vorrichtung nach Anspruch 11, **dadurch gekennzeichnet, dass** sie ein Magnetometer (MG) umfasst, das auf dem zweiten Körper (F) installiert und so gestaltet ist, dass es die Rechenmittel (MC) mit Messwerten des lokalen Magnetfeldes speist.

13. Vorrichtung nach einem der Ansprüche 1 bis 12, **dadurch gekennzeichnet, dass** die Rechenmittel (MC) auf dem zweiten Körper (F) installiert sind.

14. System (S), das von wenigstens einem ersten (H) und wenigstens einem zweiten (F) Körper gebildet wird, **dadurch gekennzeichnet, dass** es eine Betätigungsvorrichtung nach einem der vorherigen Ansprüche umfasst.

15. System nach Anspruch 14, **dadurch gekennzeichnet, dass** der/die erste(n) (H), zweite(n) (F) Körper Satelliten und Sonden sind, die für einen Formationsflug bestimmt sind.

FIG.1

FIG.2

FIG.3A          FIG.3B          FIG.3C

FIG.4A          FIG.4B          FIG.4C

FIG.5A          FIG.5B          FIG.5C

FIG.6A

FIG.6B

**RÉFÉRENCES CITÉES DANS LA DESCRIPTION**

**Documents brevets cités dans la description**

- US 6634603 B